# EUROPEAN PATENT APPLICATION

(11) **EP 1 971 164 A1**
(43) Date of publication of application: **17.09.2008**
(21) Application number: 07300854.2
(22) Date of filing: 12.03.2007
(51) Int. Cl.: H04Q 7/32, H04Q 7/38

(54) **Handover method for a mobile communication device and controller for handover of a mobile communication device**

(71) Applicant: Alcatel Lucent, 75008 Paris (FR)
(72) Inventor: Hofmann, Dirk, 74321, Bietigheim-Bissingen (DE); Sigle, Rolf, 73630, Remshalden (DE); Gebert, Jens, 71720, Oberstenfeld (DE)
(74) Representative: Schneider, Sandra

(57) **Abstract**

The invention relates to a handover method of a mobile communication device (1) from a first cell (120) to a second cell (130) within first radio access network (100). The first radio access network (100) uses a different mode of communication from a second radio access network (200) within a heterogeneous mobile network (500). The handover method comprises the steps of receiving horizontal handover information from that first radio access network (100) and blocking inter system handover decisions for mobile communication device (1) for the duration of the horizontal handover. The invention also relates to a multi radio management controller (510) additionally implementing a second handover method comprising the steps of receiving a horizontal handover request from mobile communication device (1), making a handover decision based on stored and received information and sending a handover reply back to mobile communication device (1). The invention also relates to a radio access network (100) and mobile communication device (1).

## Description

### BACKGROUND OF THE INVENTION

The present invention relates to a handover method for horizontal handover of a mobile communication device from a first cell to a second cell within a first radio access network. The first radio access network is connected to a second radio access network. The first radio access network uses a different mode of communication from the second radio access network. The first and second radio access network are comprised in a heterogeneous mobile network. The invention also relates to a multi radio management controller, a radio access network and to a mobile communication device.

In the future more and more different radio access technologies will be available. Many mobile communication devices will support a plurality of different radio access technologies. In today's cellular mobile radio networks such as GSM (Global System for Mobile Communications), GPRS (General Packet Radio Service) or UMTS (Universal Mobile Telecommunications System) the horizontal handover decision for a mobile communication device to select another serving cell within the same radio access technology is done by a network device, e. g. base station controller or radio network controller. This is mainly required to control efficiently the radio resources in each cell of the radio access network.

IEEE 802.1 1 wireless local area networks and the IEEE 802.16 standards (WiMAX - Worldwide Interoperability for Microwave Access), e. g. IEEE 802.16e, allow mobile communication devices to make the handover decision by their own. This is also called terminal based handover decision. Although the handover decision can be made in the case of IEEE 802.16e also by the network and the mobile communication device is recommended one of the cells which are contained in the network generated handover target cell list the mobile communication device can reject the network decision and can request a handover to another cell not contained in the recommended cell list.

In the future several of these access systems will be combined to a heterogeneous mobile communication network. A heterogeneous mobile communication network supports at least two mobile access technologies of different technology. A radio access network in such a heterogeneous mobile communication network supports one radio access technology and may comprise additional network devices such as base stations to provide a mobile communication functionality. A heterogeneous mobile communication network comprises radio access networks of different radio access technologies and a core network interconnecting the radio access networks. A heterogeneous network has benefits for the user and the operator of the network. The user can be best connected by managing his radio connections to the most adequate access system. The operator can do load sharing to optimise network performance and the network utilisation, for example.

The overall radio resources and the inter system mobility within the heterogeneous mobile network can be controlled by a multi resource management with a master entity in the core network, further entities in the radio access networks and a slave function in the mobile communication device. This multi resource management can be used to decide primarily on vertical intersystem handovers and to do load sharing in between the different radio access systems.

In the German Patent Application Publication DE 10322205 A1 a decision device in a mobile communication network is described which decides about vertical and horizontal handovers in heterogeneous mobile networks.

In the IEEE 802.21 Draft D04.00 specification Link State Change events and Link Synchronous events are defined that are relevant in upper layer mobility management decision making.

### OBJECT OF THE INVENTION

The invention has the object of providing a handover method in a heterogeneous mobile communication network. Other objects of the invention are to provide a multi radio management controller, a radio access network and a mobile communication device.

### SUMMARY OF THE INVENTION

These objects and others that appear below are achieved by a handover method according to claim 1 and claim 2, a mobile communication terminal according to claim 8, a radio access network according to claim 11 and a multi radio management controller according to claim 12.

The invention provides a method for horizontal handover of a mobile communication device from a first cell to a second cell within a first radio access network. The first radio access network is connected to a second radio access network, whereas the first radio access network uses a different mode of communication from the second radio access network. The first and second radio access network are comprised in a heterogeneous mobile network.

According to one aspect of the invention, the method makes a handover decision about a horizontal handover within said first radio access network. This handover decision is made within the first radio access network, for example within the mobile communication device for which a handover is to be performed or for example in a radio management controller located outside said mobile communication device in said first radio access network. A handover decision within the mobile communication device is also called a terminal based handover decision. The horizontal handover of the mobile communication device is then performed within said first radio access network. Information about the horizontal handover is transmitted to an entity in said heterogeneous mobile network, e. g. a multi radio management controller. The entity receives the information about said horizontal handover. The information about the horizontal handover is preferably transmitted by the mobile communication device during an ongoing horizontal handover procedure. The information about the horizontal handover is preferably received by the entity during an ongoing horizontal handover procedure. Preferably, the information about the horizontal handover is transmitted and received more than once during an ongoing horizontal handover procedure in order to keep the entity informed about ongoing horizontal handover procedures.

The entity receiving the information about the horizontal handover can be located in one network node or be distributed over more than one network nodes. It is for example a multi resource management controller.

The entity receiving the information about the horizontal handover is preferably located outside said first radio access network, but may also wholly or partly be located inside said first radio access network. The entity is for example a multi radio management controller located in the heterogeneous mobile network. The multi radio management controller is preferably located in the core network outside of the first radio access network and outside of the second radio access network. A multi radio management controller may comprise more than one parts that may be distributed over more than one network node. All or part of the multi radio management controller may be located inside said first radio access network.

The entity receiving the information about the horizontal handover may also be located inside said first radio access network

In a preferred embodiment of the invention, the entity receiving the information about the horizontal handover blocks any vertical handover decisions for handovers of the mobile communication device from the first radio access network to the second radio access network during an ongoing horizontal handover procedure. The entity uses the information about the horizontal handover to determine if there is an ongoing horizontal handover procedure.

In large heterogeneous mobile networks not all kind of handover procedures, e. g. horizontal and vertical ones, can be controlled due to scalability reasons by a multi radio management controller, responsible for all radio access systems. Therefore, most horizontal handover procedures should be controlled autonomously by radio management controllers of the specific radio access systems. The radio management controllers are located within the specific radio access systems, but outside the mobile communication devices. For a perfect inter working of radio management controllers in the specific radio access systems with a multi radio management controller at a higher layer it is required, that the multi radio management controller has knowledge about each horizontal handover event. For some radio access technologies with originally terminal based handover decisions, the multi radio management can be configured to also decide on horizontal intra system handovers. This can be used to better comply with operator policies, that don't allow for any terminal based handover decisions. Furthermore, a better overall network performance can be obtained, if all handover decisions, horizontal ones and vertical ones, are made by network entities that are under full control of the network operator rather than by the mobile communication device.

For this purpose, all access systems need some kind of modification. Access systems with network based handover decisions, like GSM or UMTS, need a modification to generate handover events to the higher layer multi radio management controller. Access systems with mobile communication device based handover decisions, like for example IEEE 802.1 1 or IEEE 802.16e, can be incorporated with a modification of their terminal based handover decision function. Using this modification, the multi resource management entities, comprising radio management controllers and a multi radio management controller, can be used to decide also on horizontal handovers for specific access systems. This means that the terminal based handover decisions of such access systems are shifted to the network based handover decision located in the multi resource management controller.

According to one aspect of the invention the handover decision for handing over a mobile communication device from one cell to another cell of the same access system within a heterogeneous mobile communication network is split in a such a way that for some cases the handover decision is made in a multi radio management controller placed in the core network and in other cases the decision is made in the technology specific radio access network. In case of a system where the access selection or handover can be initiated or executed in a technology specific radio access network as well as in a multi radio management controller entity placed in the core network, it depends on the network operator policies if the technology specific radio access network shall make the handover decision, shall report the handover start event to the multi radio management controller entity, shall execute the handover and shall report the intra system handover end event to the multi radio management controller entity or if all handover decisions of a technology specific radio access network are completely shifted towards the multi radio management controller entity. The multi radio management controller entity may comprise one or more parts that may be located in one or more network nodes.

A network operator can provide service according to certain policies, e. g. mobile communication device based handover decisions are allowed or are not allowed. Dependent on the network operator policies horizontal handover decisions within a specific radio access network can be taken within that radio access network and then reported to a multi radio management controller entity or all handover decisions are shifted towards the multi radio management controller entity.

In one mode of operation, a mobile communication device is handed over from a cell of a first radio access network with network based handover decisions, to another cell of the first radio access network. The radio management controller of the first radio access network decides for a horizontal handover of a mobile communication device to another cell of the same radio access network. Before starting the handover execution said radio management controller sends a handover start event to the multi radio management controller. Said multi radio management controller uses this information to block own handover decisions for said mobile communication device as long as the successful horizontal handover execution is finished. After successful execution of the horizontal handover procedure, said radio management controller sends a handover end event to the multi radio management controller. Said multi radio management controller uses this information to deblock own handover decisions for said mobile communication device.

In another mode of operation, the mobile communication device is handed over from a cell of a radio access network with normally terminal based handover decisions to another cell of the same radio access network. In this mode of operation no terminal based handover decisions are allowed due to operator policy reasons. The radio interface of the mobile communication device detects that the service cannot longer be supported by the serving cell due to poor radio link quality and candidate cells are available with better radio link quality. Said radio interface sends a handover request with radio link quality information of serving and candidate radio links to said multi resource management controller, e. g. the radio management controller of the network and/or the multi radio management controller. The handover decision of said multi resource management controller is based on said radio link quality and load information received from said radio access network. The horizontal handover decision of said multi resource management controller is sent back to said radio interface. Said radio interface performs a horizontal handover procedure to a target cell, selected by said multi resource management controller.

All network based radio management controllers sent periodically or event triggered load information of one, several or all cell(s) to the multi radio management controller. The network based radio management controllers are located in the specific radio access networks. The network based radio management controllers are located outside of the mobile communication device. The multi radio management controller receiving those information from radio management controllers stores those information in a database.

If a network based radio management controller decides on horizontal handover decisions, then events for the beginning and the end of the handover process for a mobile communication device are send to the multi radio management controller. Receiving a handover start event from said radio management controller vertical handover decisions for said mobile communication device are blocked. Receiving a handover end event from said radio management controller vertical handover decisions for said mobile communication device are deblocked.

If a terminal based radio interface can decide on horizontal handover decisions, then the operation mode of the multi resource management controller depends on the network operator policies.

If terminal based handover decisions are allowed, then the radio interface decides on horizontal handover decisions and sends events for the beginning and the end of the handover process to the multi resource management controller, e.g. the radio management controller of the network or the multi radio management controller. For the duration of the horizontal handover any vertical handover decisions at the multi radio management controller are blocked.

If terminal based handover decisions are not allowed, then the radio interface sends a handover request with radio link quality information of serving and candidate radio links via a mobile communication device based multi radio management controller slave to a network based multi resource management controller. Said network based multi resource management controller receiving a handover request message with radio link quality information of serving and candidate links from the mobile communication device comprises a decision module configured to make a handover decision of said mobile communication device from a cell of said radio access network to another cell of said radio access network. Said decision module may for example be located in the radio management controller of the network or the multi radio management controller. The decision module makes the handover decision based on said information. The multi resource management controller comprises means for transmitting the handover decision back to the mobile communication device.

### BRIEF DESCRIPTION OF THE DRAWINGS

Other characteristics and advantages of the invention will become apparent in the following detailed description of a preferred embodiment of the invention. The preferred embodiment of the invention will be illustrated by the accompanying drawings given by way of non-limiting illustrations.
Figure 1 shows a schematic overview of a mobile communication device with two radio interfaces,
Figure 2 shows a schematic overview of a heterogeneous mobile network comprising a core network and two radio access networks comprising two cells each.

### DETAILED DESCRIPTION OF THE INVENTION

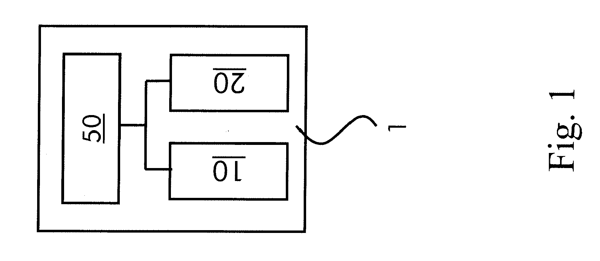

Figure 1 shows a schematic overview of a mobile communication device 1 with two radio interfaces 10 and 20 using different access technologies and a multi radio management controller slave 50. Instead of two separate interfaces also a single radio interface 10/20 with software defined radio (SDR) or other multi radio technique could be used to switch between different access technologies. The described invention works in both cases. The radio interfaces 10 and 20 comprise legacy radio resource management and mobility management functions of the respective radio access system each. Both interfaces provide functionality that enables them to inter work with the multi radio management controller slave 50 for inter system procedures, e.g. inter system handover. The radio interfaces 10 and 20 are connected to the multi radio management controller slave 50.

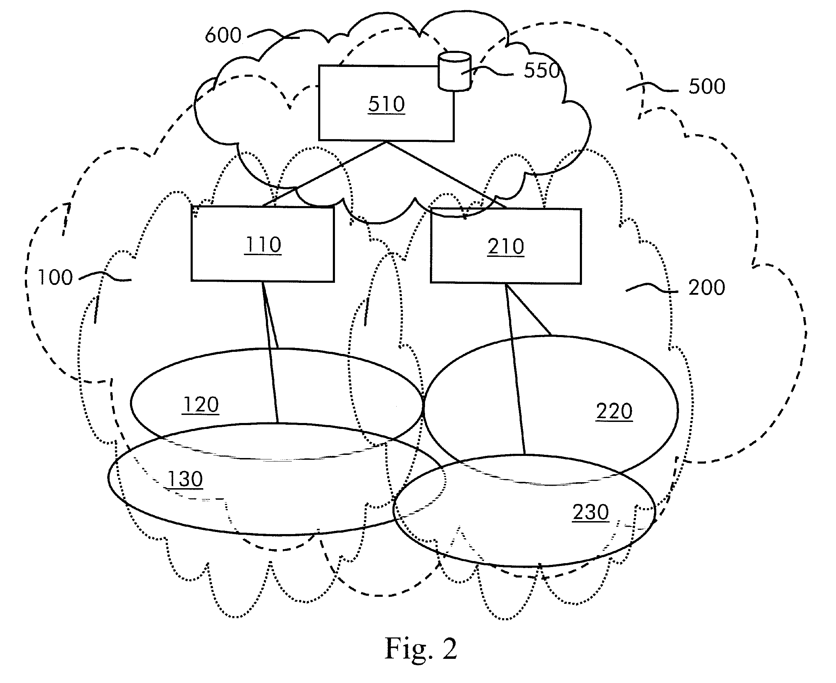

Figure 2 shows a schematic overview of a heterogeneous mobile communication network 500 comprising a core network 600, a first radio access network 100 and a second radio access network 200. The core network interconnects the radio access networks 100 and 200 comprised in the heterogeneous mobile communication network. It may also interconnect radio access networks of the same type of radio access technology comprised in the heterogeneous mobile communication network.

The heterogeneous mobile communication network 500 comprises a multi resource management controller. The multi resource management controller comprises a multi radio management controller 510 and radio management controllers 110 and 210 in radio access networks 100 and 200, respectively. The two radio access networks 100, 200 are of different radio access technology. Comprised in the radio access network 100 are cells 120 and 130. Comprised in the radio access network 200 are cells 220 and 230. The radio management controllers 110 and 210 comprise the legacy radio resource management and mobility management functions of the radio access systems 100 and 200. The radio management controllers 110 and 210 have functionality that enables them to inter work with the multi radio management controller 510. The radio management controllers 110 and 210 are connected to the multi radio management controller 510.

The multi radio management controller 510 has a global view of the network resources. It knows for example the load situation of cells from different radio access networks 100, 200. This global information is for example not available to the radio management controllers 110 or 210. According to an embodiment of the invention, one or more of the radio management controllers 110, 210 can be enhanced by functionality of the multi radio management controller 510 and perform part or all of the tasks of a multi radio management controller 510. This means that according to an embodiment of the invention, parts or all of the multi radio management controller 510 can be located inside one or both of the radio management controllers 110 or 210. In this embodiment, one or both of the modules 110 or 210 comprise legacy radio resource management and mobility management functions as well as multi radio management controller 510 functions.

The radio interface 10 of mobile communication device 1 is used for communication with radio access network 100 and radio interface 20 is used for communication with radio access network 200. The multi radio management controller slave 50 in the mobile communication equipment 1 communicates with the multi radio management controller 510 in the core network 600 for message exchange on multi radio access issues.

The inter working for handover purposes in between the mobile communication device 1 and the heterogeneous mobile network 500 comprises transmitting measurement configuration information and link commands from the multi radio management controller 510 via the multi radio management controller slave 50 to the radio interfaces 10 and 20 and/ from the multi radio management controller 510 to the radio management controllers 110 and 210. The inter working also comprises measurement reports and state signalling on the reverse direction from the radio interfaces 10 and 20 to the multi radio management controller slave 50 and/or to the multi radio management controller 510 and measurement reports, load reports and state signalling from the radio management controllers 110 and 210 to the multi radio management controller 510.

The multi radio management network support for horizontal handovers can optionally be restricted to those situations where the quality of service for a user or load balancing cannot be provided by terminal based handover decisions. Terminal based handover decisions are decisions that are taken within the mobile communication device. It is advantageous however to take handover decisions in the network also for radio access systems with terminal based handover decisions. In such a case the intra system handover decision function in the mobile communication device is switched off. The radio interfaces 10 and 20 are configurable with respect to them. Then they communicate measurements and handover requests to the multi radio management controller slave 50 which transfers them to the network based multi radio management controller 510.

There can be situations where handover decisions within the mobile communication device are advantageous and other situations where network based handover decisions are preferable. The legacy layer-2 functions comprised in the modules 10, 20, 110 and 210 are configurable as well as the multi radio management controller slave 50 and multi radio management controller 510 are configurable. This allows for a configuration being adaptive to the situation and the needs of the situation. By this, the multi radio management controller slave 50 and multi radio management controller 510 can be protected against a flooding of measurements and load information if there is no requirement for a network based horizontal handover decision in the multi resource management controller.

The radio interfaces 10 and 20 in the mobile communication device are configured in such a way that optionally for every horizontal handover decision the multi radio management controller slave 50 can be asked which communicates with the multi resource management controller comprising the multi radio management controller 510.

On the network side the radio management controllers 110 and 210 report all available legacy load reports and further state information to the multi radio management controller 510. The multi radio management controller 510 stores the legacy load reports and the other state information in the database 550.

In a preferred embodiment of the invention, if no terminal based handover decisions are allowed, then for each case a terminal based horizontal handover decision would be made, the multi radio management controller slave 50 of the mobile communication device 1 signals to the multi radio management controller 510 of the multi resource management controller the requirement for a handover decision. It communicates also the available measurements of the serving cell and candidate cells. Then the multi radio management controller 510 can make a horizontal handover decision based on the received measurements of the mobile communication device 1 and based on the load situation in the cells 120 and 130 in case radio access network 100 or cells 220 and 230 in case of radio access network 200 and based on further state information. This decision is transmitted back to the multi radio management controller slave 50 of the mobile communication device and then transferred to the radio interface 10 or 20. Finally the respective radio interface 10 or 20 of the mobile communication device 1 performs a handover procedure to a target cell that was selected by the multi radio management controller 510.

The multi radio management controller 510 of the core network 600 makes vertical handover decisions of mobile communication devices from one radio access network to another radio access network. For this purpose the multi radio management controller 510 receives information from the radio access networks 100 and 200. The radio management controllers 110 and 210 report intra system handovers to the multi radio management controller 510. The radio management controllers 110 and 210 may preferably also report suggestions for inter system handovers to the multi radio management controller 510. The suggestions can then be used by the radio management controller 510 to make the handover decision.

That information transmitted from the radio management controllers 110 and 210 to the multi radio management controller 510 comprises besides load information and other state information also information about intra system handovers within the radio access networks 100 or 200. The received intra system handover information is used to block inter system handover decisions for a mobile communication device as long as the intra system (horizontal) handover procedure of the mobile communication device is not finished.

Legacy intra system handovers within a heterogeneous mobile network are for example advantageous for compliance with current standards and for performance reasons. This means that the radio management controllers 110 and 210 selects the best cell in its own radio access network 100 and 200, respectively. The multi radio management controller 510 is an additional functionality that selects the best radio access technology. In a preferred embodiment of the invention the multi radio management controller 510 detects a better radio access technology and selects the best cell of the other radio technology. Handovers in between different radio access networks also called intersystem handovers are performed by the multi radio management controller 510.

The invention provides an advantageous method for splitting handover decisions in between a multi radio management controller 510 located in an core network 600 and radio management controllers 110, 210 located in radio access networks 100 and 200, respectively. In case of a system where the access selection or handover can be initiated or executed in a technology specific radio access network as well as in a multi radio management controller 510 the technology specific radio access network 100 or 200 shall report information of the beginning and the end of all intra system handovers to the multi radio management controller 510 over its radio management controllers 110 or 210. The multi radio management controller 510 then knows, when it is able to decide on handover between two or more radio access networks of different radio access technology. The multi radio management controller 510 makes the access selection and instructs the radio access networks100 or 200 to perform the inter system (vertical) handover. Therefore, the multi radio management controller 510 sends a handover command to the radio management controllers 110 or 210 for networks with network-based handover decisions or to the multi radio management controller slave 50 for networks with terminal-based handover decisions.

## Claims

1. A method for horizontal handover of a mobile communication device (1) from a first cell (120) to a second cell (130) within a first radio access network (100), the first radio access network (100) being connected to a second radio access network (200), the first radio access network (100) using a different mode of communication from the second radio access network (200), the first and second radio access network (100, 200) being comprised in a heterogeneous mobile network (500), the method comprising the steps of:
making within said first radio access network (100) a handover decision about said horizontal handover within said first radio access network (100),
performing said horizontal handover of said mobile communication device (1) within said first radio access network (100),
transmitting information about said horizontal handover to an entity in said heterogeneous mobile network (500).

2. A method for horizontal handover of a mobile communication device (1) from a first cell (120) to a second cell (130) within a first radio access network (100), the first radio access network (100) being connected to a second radio access network (200), the first radio access network (100) using a different mode of communication from the second radio access network (200), the first and second radio access network (100, 200) being comprised in a heterogeneous mobile network (500), the method comprising the steps of:
receiving information about said horizontal handover at an entity in said heterogeneous mobile network (500).

3. Method according to claim 2, further comprising the step of blocking any vertical handover decisions for handovers of said mobile communication device (1) from said first radio access network (100) to said second radio access network (200) during an ongoing horizontal handover procedure.

4. Method according to one of the claims 1 to 3, **characterized by** said entity in said heterogeneous mobile network (500) being located inside said first radio access network (100) and/or inside a core network (600) connecting said first radio access network (100) and said second radio access network (200).

5. Method according to one of the claims 1 to 4, **characterized by** said information about said horizontal handover comprising information about one or more of the following information: said mobile communication device (1), said second cell (130), a handover start event, a handover end event.

6. Method according to one of the claims 1 to 5, **characterized by** decisions about said handover within said first radio access network (100) being taken within said mobile communication device (1).

7. Method according to one of the claims 1 to 6, **characterized by** said entity in said heterogeneous mobile network being a multi resource management controller (110, 210, 510).

8. Mobile communication device (1) within a first radio access network (100), comprising
means for making a handover decision about a horizontal handover from a first cell (120) to a second cell (130) within said first radio access network (100), further comprising
means for performing said horizontal handover of said mobile communication device (1) within said first radio access network (100),
**characterized by**
means for transmitting information about said horizontal handover to an entity outside said mobile communication device (1).

9. Mobile communication device (1) according to claim 8, further
**characterized by**
means for transmitting a handover request message for requesting a horizontal handover from a first cell (120) to a second cell (130) within said first radio access network,
whereas said handover request message is transmitted to an entity outside said mobile communication device (1).

10. Mobile communication device (1) according to claim 8 or 9, further
**characterized by**
said entity outside said mobile communication device (1) being located inside said first radio access network (100) and/or inside a core network (600) connecting said first radio access network (100) and said second radio access network (200).

11. Radio Access Network (100), comprising means for making a handover decision about a horizontal handover for a mobile communication device (1) from a first cell (120) to a second cell (130) within said first radio access network (100), further comprising
means for performing said horizontal handover of said mobile communication device (1) within said first radio access network (100),
**characterized by**
means for transmitting information about said horizontal handover to an entity in said heterogeneous mobile network (500).

12. A multi radio management controller (510) in a heterogeneous mobile network (500), the heterogeneous mobile network (500) comprising a first radio access network (100) and a second radio access network (200), the first radio access network (100) being connected to a second radio access network (200), the first radio access network (100) using a different mode of communication from the second radio access network (200), the multi radio management controller (510) comprising:
means for receiving information about a horizontal handover of a mobile communication device (1) from a first cell (120) to a second cell (130) within said first radio access network (100),
said information about said horizontal handover within said first radio access network (100) being received for the horizontal handover for which the handover decision is made within said first radio access network (100), and which is performed within said first radio access network (100).

13. Controller according to claim 12, **characterized by**
means for blocking any vertical handover decisions for handovers of said mobile communication device (1) from said first radio access network (100) to said second radio access network (200) during an ongoing horizontal handover procedure.

14. Controller according to claim 12 or 13, **characterized by**
said information about said horizontal handover comprising information about one or more of the following information: said mobile communication device (1), said second cell (130), a handover start event, a handover end event.

15. Controller according to one of the claims 12 to 14, further comprising
means for receiving a handover request message from said mobile communication device (1) requesting a horizontal handover from a first cell (120) to a second cell (130) within said first radio access network,
a decision module configured to make a handover decision about said requested horizontal handover,
means for transmitting a handover reply message to said mobile communication device (1), said handover reply message comprising information about said handover decision.

16. Controller according to claim 15, **characterized by**
said handover request message comprising measurement information of serving radio links and of candidate radio links of said mobile communication device (1).

17. Controller according to one of the claims 15 or 16, further comprising means for receiving cell load reports and further state information from first and second radio management controllers (110, 210) of said first and second radio access networks (100, 200) and
a database (550) for storing said cell load reports and further state information.

18. Controller according to claim 17, **characterized by**
said decision module using said measurement information of said serving and candidate radio links and said cell load reports and said further state information for making said handover decision.
